# DEMANDE DE BREVET EUROPEEN

(11) **EP 1 070 618 A1**
(43) Date de publication de la demande: **24.01.2001**
(21) Numéro de dépôt: 00420162.0
(22) Date de dépôt: 21.07.2000
(51) Int. Cl.: B60J 7/08

(54) **Dispositif pour l'enroulement et le déroulement d'une bâche de protection au-dessus d'une benne ou container.**

(30) Priorité: 23.07.1999 FR 9909756
(71) Demandeur: OMMEP, 26140 Saint Rambert d'Albon (FR)
(72) Inventeur: Martel, Denis, 26140 Anneyron (FR)
(74) Mandataire: Schmitt, John

(57) **Abrégé**

Le dispositif pour l'enroulement et le déroulement d'une bâche (2) de protection au-dessus d'un conteneur (3) transportable sur un véhicule tracteur, comporte :
- un caisson (4) qui est fixé à l'intérieur du conteneur (3), et plus particulièrement dans la partie supérieure de la paroi (8) recevant des moyens d'accrochage (11) d'un bras à crochet solidaire du véhicule tracteur ;
- une bâche (2) de couverture qui est déplacée entre une position rétractée ou enroulée à l'intérieur du caisson (4), à une position tendue ou déroulée pour couvrir le conteneur (3) ;
- des moyens de traction (38) pour le déroulement de la bâche au-dessus du conteneur ;
- et des moyens d'entraînement (31) pour l'enroulement de la bâche (2) autour d'un arbre horizontal (25) qui est guidé à l'intérieur du caisson (4).

## Description

La présente invention est relative à un dispositif pour l'enroulement et le déroulement d'une bâche de protection au-dessus d'une benne ou conteneur transportable sur un véhicule tracteur.

On connaît d'après la demande de brevet internationale PCT W098/05527, un dispositif de couverture pour couvrir l'ouverture supérieure d'un conteneur transportable sur un véhicule.

Le dispositif de couverture est fixé sur un bras articulé à crochet permettant de saisir le conteneur et de le charger sur ledit véhicule tracteur. Le bras articulé à crochet est monté sur le véhicule tracteur.

Le dispositif de couverture comporte des moyens de couverture constitués d'un dispositif d'enroulement et d'une bâche qui est déroulée entre une position rétractée à l'intérieur du dispositif d'enroulement à une position tendue pour couvrir le conteneur porté sur le véhicule tracteur.

Le dispositif d'enroulement comporte un caisson qui est fixé sur le bras à crochet du véhicule tracteur. Le caisson est disposé dans un plan horizontal et perpendiculaire à l'axe principal du bras à crochet. Le caisson présente un arbre horizontal guidé entre les parois extrêmes pour l'enroulement et le déroulement de la bâche extensible de couverture.

Le caisson est principalement ouvert du coté dirigé en direction du conteneur à recouvrir pour permettre le déroulement de la bâche.

La bâche de couverture comporte dans un fourreau parallèle à l'arbre horizontal un guide sur lequel est fixée une corde de traction pour permettre le déroulement de ladite bâche au-dessus du conteneur.

Les cotés de la bâche comporte des rebords et des oeillets pour le passage d'une corde élastique permettant la fixation de ladite bâche sur les cotés du conteneur.

Le dispositif de couverture décrit ci-dessus comporte certains inconvénients en ce qui concerne plus particulièrement les difficultés que rencontre les individus pour dérouler et enrouler la bâche du fait de sa position sur le bras à crochet solidaire du véhicule tracteur et ne permet pas la protection du conteneur sur la remorque.

Le dispositif pour l'enroulement et le déroulement d'une bâche suivant la présente invention à pour objet d'améliorer la mise en place de la bâche sur le conteneur et de soulager les efforts des individus qui actionne le dispositif.

En outre le dispositif pour l'enroulement et le déroulement d'une bâche suivant l'invention permet d'éviter à l'individu manipulant ledit dispositif de monter sur le conteneur pour dérouler ou enrouler la bâche.

Le dispositif pour l'enroulement et le déroulement d'une bâche suivant la présente invention est exclusivement utilisé pour des conteneurs ou des bennes afin d'assurer la sécurité d'une part pendant le transport des conteneurs et d'autre part pendant le stockage des conteneurs sur les sites des entreprises.

Enfin, la bâche utilisée pour recouvrir le conteneur ou la benne peut être un filet étanche ou non permettant une parfaite retenue des produits en vrac contenus dans ledit conteneur.

Le dispositif pour l'enroulement et le déroulement d'une bâche de protection au-dessus d'un conteneur transportable sur un véhicule tracteur ou sur une remorque tractée, comporte :
- un caisson qui est fixé à l'intérieur du conteneur, et plus particulièrement dans la partie supérieure de la paroi recevant des moyens d'accrochage d'un bras à crochet solidaire du véhicule tracteur, ledit caisson étant positionné de manière qu'une partie de sa hauteur dépasse au-dessus du conteneur ;
- une bâche de couverture qui est déplacée entre une position rétractée ou enroulée à l'intérieur du caisson, à une position tendue ou déroulée pour couvrir le conteneur ;
- des moyens de traction pour le déroulement de la bâche au-dessus du conteneur ;
- et des moyens d'entraînement pour l'enroulement de la bâche autour d'un arbre horizontal qui est guidé à l'intérieur du caisson.

Le dispositif pour l'enroulement et le déroulement d'une bâche de protection au-dessus d'un conteneur suivant l'invention comporte un caisson métallique qui est obtenu à partir d'une tôle pliée afin de délimiter un fond, des parois parallèles et verticales de grande longueur.

Le dispositif pour l'enroulement et le déroulement d'une bâche de protection au-dessus d'un conteneur suivant l'invention comporte un caisson métallique dont les parois sont réunies entre elles dans la partie supérieure dudit caisson par une ceinture périphérique de renfort.

Le dispositif pour l'enroulement et le déroulement d'une bâche de protection au-dessus d'un conteneur suivant l'invention comporte un caisson métallique dont la paroi verticale reçoit dans sa partie supérieure un couvercle qui est articulé autour de charnières pour fermer ledit caisson.

Le dispositif pour l'enroulement et le déroulement d'une bâche de protection au-dessus d'un conteneur suivant l'invention comporte un caisson métallique dont le couvercle est obtenu par pliage d'une tôle de manière à présenter deux ailes extrêmes et opposées venant obstruer, en position fermée, les cotés ouverts de plus petites dimensions dudit caisson.

Le dispositif pour l'enroulement et le déroulement d'une bâche de protection au-dessus d'un conteneur suivant l'invention comporte un caisson métallique dont l'un de ses cotés ouvert présente une joue en forme d'équerre, dont sa face horizontale est solidaire de deux tôles verticales et opposées, qui se termine au niveau de la ceinture de renfort, et d'un palier pour le guidage en rotation de l'arbre horizontal.

Le dispositif pour l'enroulement et le déroulement d'une bâche de protection au-dessus d'un conteneur suivant l'invention comporte un caisson métallique dont l'un de ses cotés ouvert présente une joue en forme d'équerre dont sa face horizontale est solidaire d'une tôle verticale s'étendant jusqu'à la ceinture périphérique, d'une goulotte de protection à profil coudé.

Le dispositif pour l'enroulement et le déroulement d'une bâche de protection au-dessus d'un conteneur suivant l'invention comporte des moyens de traction qui sont constitués d'un tube logé dans un fourreau réalisé dans un pli de la bâche et d'une perche qui pénètre dans le tube pour, d'une part soulever la bâche au-dessus des produits en vrac retenus dans le conteneur, et d'autre part déplacer ou dérouler la bâche.

Le dispositif pour l'enroulement et le déroulement d'une bâche de protection au-dessus d'un conteneur suivant l'invention comporte une perche constituée d'une tige verticale se prolongeant à chaque extrémité par une tige horizontale dirigée dans des directions opposées.

Le dispositif pour l'enroulement et le déroulement d'une bâche de protection au-dessus d'un conteneur suivant l'invention comporte une tige verticale qui est reliée à celle horizontale par l'intermédiaire d'un tube de renfort comportant à proximité de la tige verticale un raccordement horizontal.

Le dispositif pour l'enroulement et le déroulement d'une bâche de protection au-dessus d'un conteneur suivant l'invention comporte des moyens de traction qui sont constitués d'une sangle et d'un bras télescopique qui se soulève au-dessus du conteneur au niveau de sa porte.

Le dispositif pour l'enroulement et le déroulement d'une bâche de protection au-dessus d'un conteneur suivant l'invention comporte un bras télescopique dont son extrémité supérieure présente une fourche destinée à recevoir la sangle de traction.

Le dispositif pour l'enroulement et le déroulement d'une bâche de protection au-dessus d'un conteneur suivant l'invention comporte des moyens d'entraînement qui sont constitués d'un assemblage d'axes cylindriques guidés dans des paliers et reliés entre eux par des cardans ou renvois d'angles.

Le dispositif pour l'enroulement et le déroulement d'une bâche de protection au-dessus d'un conteneur suivant l'invention comporte des axes cylindriques qui sont disposées dans des plans d'inclinaisons différents par rapport au plan horizontal contenant l'arbre d'enroulement de la bâche.

Le dispositif pour l'enroulement et le déroulement d'une bâche de protection au-dessus d'un conteneur suivant l'invention comporte un axe cylindrique qui est solidaire d'un anneau prévu pour recevoir le crochet d'une canne permettant l'entraînement en rotation de l'arbre pour l'enroulement de la bâche.

Le dispositif pour l'enroulement et le déroulement d'une bâche de protection au-dessus d'un conteneur suivant l'invention comporte une face horizontale qui est solidaire d'un palier pour le guidage en rotation de l'arbre horizontal.

Dispositif pour l'enroulement et le déroulement d'une bâche de protection au-dessus d'un conteneur suivant l'invention comporte une face horizontale et une face inclinée qui sont prévues pour recevoir les moyens d'entraînement pour l'enroulement de la bâche autour de l'arbre horizontal.

La description qui va suivre en regard des dessins annexés, donnés à titre d'exemple non limitatif, permettra de mieux comprendre l'invention, les caractéristiques qu'elle présente et les avantages qu'elle est susceptible de procurer :

Figures 1 à 3 sont des vues montrant en détail le caisson fixé à l'intérieur du conteneur pour le déroulement et le déroulement de la bâche.

Figures 4 et 4a sont des vues représentant les étapes d'une première solution pour le déroulement de la bâche au-dessus du conteneur.

Figures 5 et 5a sont des vues représentant les étapes d'une seconde solution pour le déroulement de la bâche au-dessus du conteneur.

Figures 6 et 7 sont des vues illustrant la fixation de la bâche de protection sur les bords du conteneur.

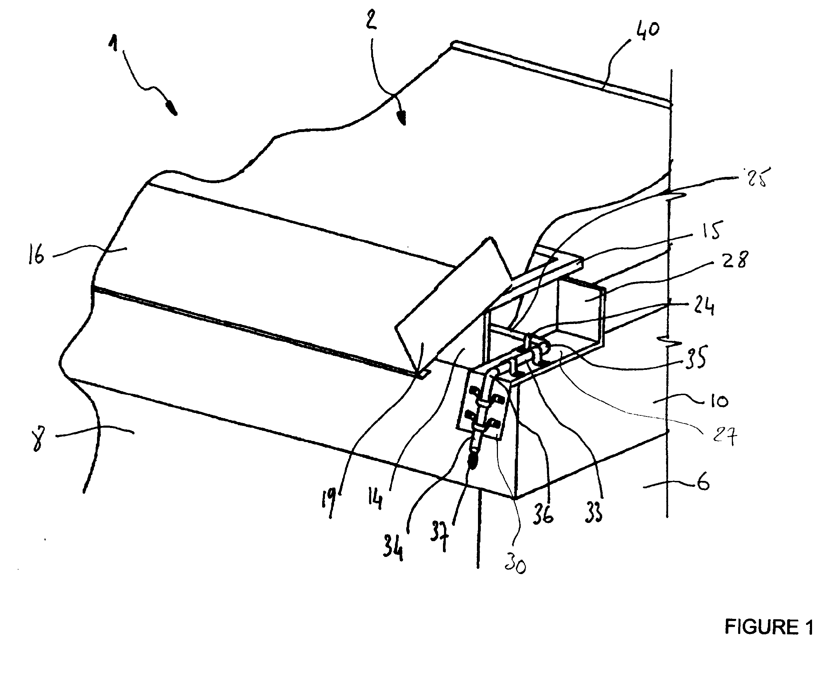

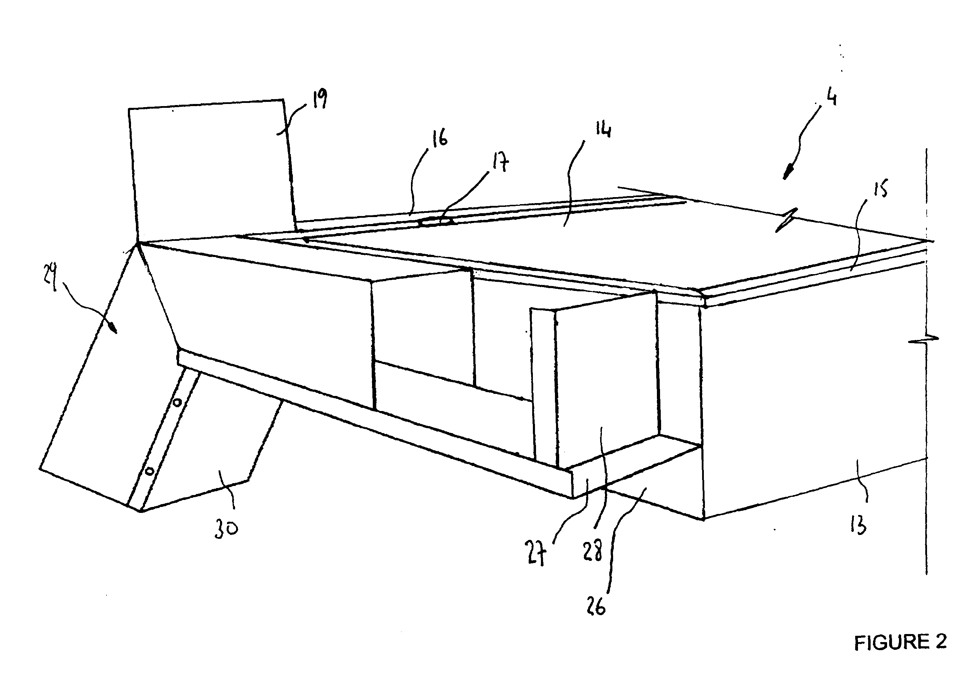

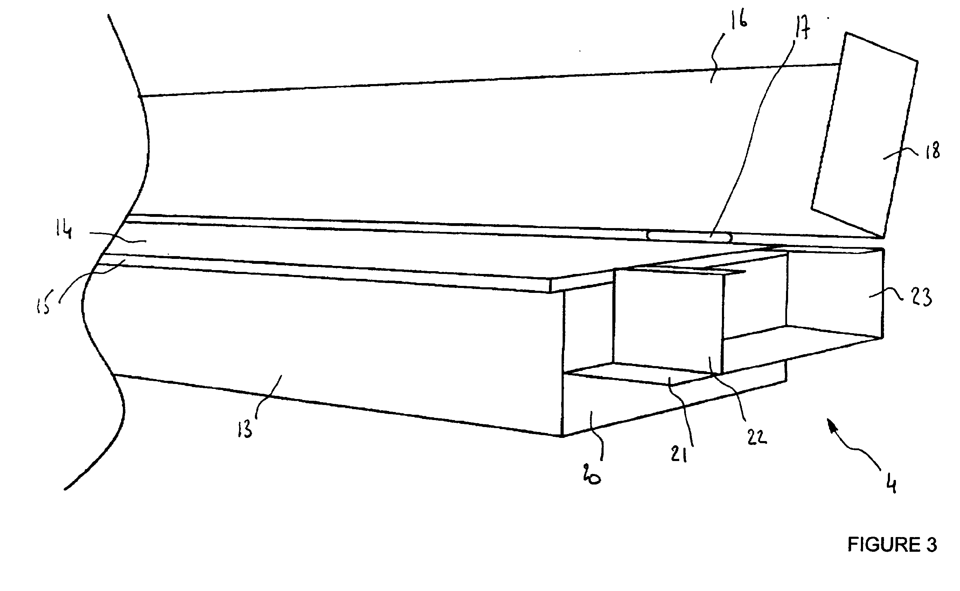

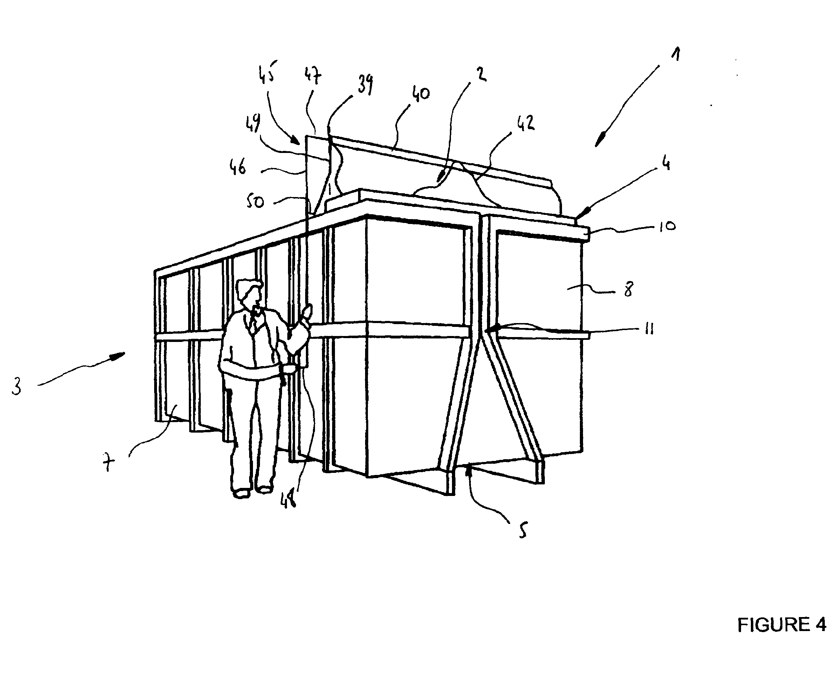

On a montré en figures 1 à 3 un dispositif 1 pour l'enroulement et le déroulement d'une bâche ou d'un filet de protection 2 au-dessus d'un conteneur ou une benne 3 transportable sur un véhicule tracteur ou sur une remorque tractée non représenté.

Le conteneur 3, connu en soi, de forme rectangulaire, est constitué d'un fond horizontal 5 à partir duquel s'étendent verticalement des parois parallèles et longitudinales 6 et 7 et une paroi 8 perpendiculaire aux deux premières.

A l'opposée de la paroi 8 le conteneur 3 est fermé par une porte 9 à deux vantaux permettant le déchargement des produits en vrac.

Dans la partie supérieur le conteneur 3 comporte un renfort 10 formant ceinture et reliant entre elles les parois verticales 6 à 8.

Le dispositif 1 pour l'enroulement et le déroulement d'une bâche de protection 2 comporte un caisson métallique 4 qui est fixé à l'intérieur du conteneur 3, et plus particulièrement dans la partie supérieure et contre la face interne de la paroi 8 dudit conteneur.

La paroi 8 reçoit sur sa face externe des moyens d'accrochage 11 pour la mise en place d'un bras à crochet solidaire du véhicule tracteur non représenté.

Le caisson métallique 4 est fixé de manière qu'une partie de sa hauteur dépasse au-dessus du conteneur 3, et plus particulièrement du renfort 10. La hauteur dépassant au-dessus du conteneur 3 est équivalente à la moitié de la hauteur totale du caisson 4.

Le caisson métallique 4 est obtenu à partir d'une tôle pliée afin de délimiter un fond 12, des parois parallèles et verticales de grande longueur 13, 14. Les parois 13 et 14 sont réunies entre elles dans la partie supérieure du caisson 4 par une ceinture périphérique de renfort 15.

La paroi verticale 14 reçoit dans sa partie supérieure un couvercle 16 qui est articulé autour de plusieurs charnières 17 et venant fermer le caisson 4.

Le couvercle 16 est obtenu par pliage d'une tôle de manière à présenter deux ailes extrêmes et opposées 18, 19 venant obstruer, en position fermée, les cotés ouverts de plus petites dimensions du caisson 4.

L'un des cotés ouvert du caisson 4, et plus particulièrement celui venant en appui contre la face interne de la paroi verticale 7 du conteneur 3, comporte une joue 20 en forme d'équerre de manière que sa face horizontale 21 vienne au-dessus et contre le renfort périphérique 10.

La face horizontale 21 est solidaire de deux tôles verticales et opposées 22 et 23 qui se termine au niveau de la ceinture de renfort 15 du caisson 4. La face horizontale 21 de la joue 20 comporte entre les tôles 22 et 23 un palier 24 pour le guidage en rotation d'un arbre horizontal 25 autour duquel est enroulée la bâche 2.

Le caisson 4 est disposé à l'intérieur du conteneur 3, de manière que l'arbre d'entraînement 25 soit placé juste au-dessus du renfort périphérique 10 dudit conteneur, afin de permettre son entraînement en rotation.

L'autre coté ouvert du caisson 4, et plus particulièrement celui venant en appui contre la face interne de la paroi 6 du conteneur 3, comporte une autre joue 26 en forme d'équerre de manière que sa face horizontale 27 vienne au-dessus et contre le renfort périphérique 10.

La face horizontale 27 de la joue 26 est solidaire d'une tôle verticale 28 s'étendant jusqu'à la ceinture périphérique 15 du caisson 4.

A l'opposé de la tôle 28, la face horizontale 27 est solidaire d'une goulotte de protection 29 à profil coudé, d'une face inclinée 30 permettant la fixation, s'étendant en dessous de ladite face horizontale et dans une direction qui s'éloigne de la paroi verticale 8 du conteneur 3.

La face horizontale 27 comporte entre l'ouverture de la goulotte 29 et la tôle 28, un autre palier 24 qui permet le guidage en rotation de l'autre extrémité de l'arbre 25 autour duquel s'enroule la bâche 2.

On note que les faces horizontales 21 et 27 du caisson 4 supportant les paliers d'entraînement 24 de l'arbre 25, sont disposées au-dessus du renfort périphérique 10 du conteneur 3.

L'arbre 25 comporte à une extrémité, et plus particulièrement celle se trouvant à proximité de la goulotte 29 solidaire de la face horizontale 27 des moyens d'entraînement 31 qui permettent à l'aide d'une canne 32 la mise en rotation de l'arbre 25.

Les moyens d'entraînement 31 sont constitués d'un assemblage d'axes cylindriques 33, 34 guidés dans des paliers et reliés entre eux par des cardans ou renvois d'angles 35, 36.

En effet, pour que l'entraînement en rotation de l'arbre 25 puisse être parfait, il est nécessaire que les axes 33, 34 soit disposés dans des plans d'inclinaisons différents par rapport au plan horizontal contenant l'arbre 25.

Les cardans 35 et 36 sont prévus pour transmettre le couple d'entraînement en rotation à l'arbre 25 et dans chacun des plans inclinés contenant respectivement les axes cylindriques 33 et 34.

L'axe cylindrique 34 est solidaire à son extrémité libre et opposée au cardan 36 d'un anneau 37 prévu pour recevoir le crochet de la canne 32 permettant l'entraînement en rotation de l'arbre 25 pour l'enroulement de la bâche autour de ce dernier.

Lorsque le couvercle 16 est en position fermée, on constate qu'entre ce dernier et la paroi verticale 13 du caisson 4 est ménagée une fente pour le passage de la bâche 2.

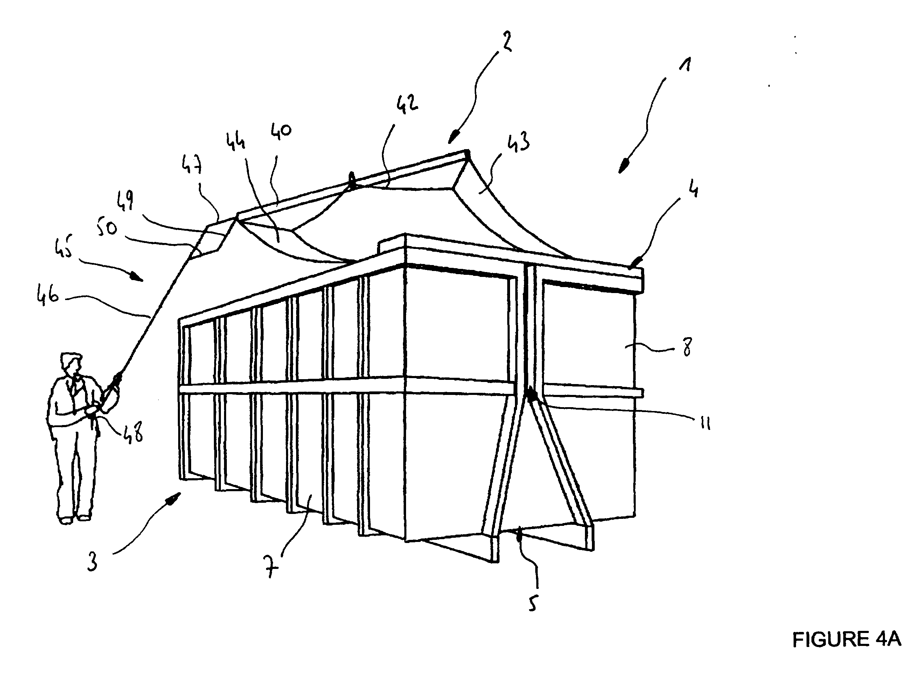

En figures 4 et 4a on a montré la bâche ou filet de couverture 2 qui comporte sur son bord extrême, et de plus petite dimension, des moyens de traction 38 qui sont constitués d'un tube 39 logé dans un fourreau 40 réalisé dans un pli de ladite bâche.

Le tube 39 est solidaire en son milieu d'une sangle de traction 41 et/ou d'un lien élastique 42 parcourant toute la longueur de la bâche 2 au niveau de ses rebords 43, 44.

Le tube 39 est destiné à recevoir une perche 45 permettant, d'une part de soulever la bâche 2 au-dessus des produits en vrac retenus dans le conteneur 3, et d'autre part de déplacer ou de dérouler la bâche 2 pour l'emmener en direction de la porte 9 située à l'opposé du caisson 4.

La perche 45 comporte une tige verticale 46 se prolongeant à chaque extrémité par une tige horizontale 47, 48. La tige 47 est reliée à celle 46 par l'intermédiaire d'un tube de renfort 49 comportant à proximité de la tige 46 un raccordement horizontal 50.

Ce dernier permet, lorsque la tige 47 est introduite dans le tube 39, de constitué un zone de retenue qui vient en appui contre la face supérieure du renfort périphérique 10 du conteneur 3 pour soulager l'individu qui déroule la bâche 2. La tige horizontale 48 est dirigée dans une direction opposée à celle 47 pour constituer un bras de préhension pour l'individu afin de pouvoir soulever et tracter la bâche 2 en direction de la porte 9 du conteneur 3.

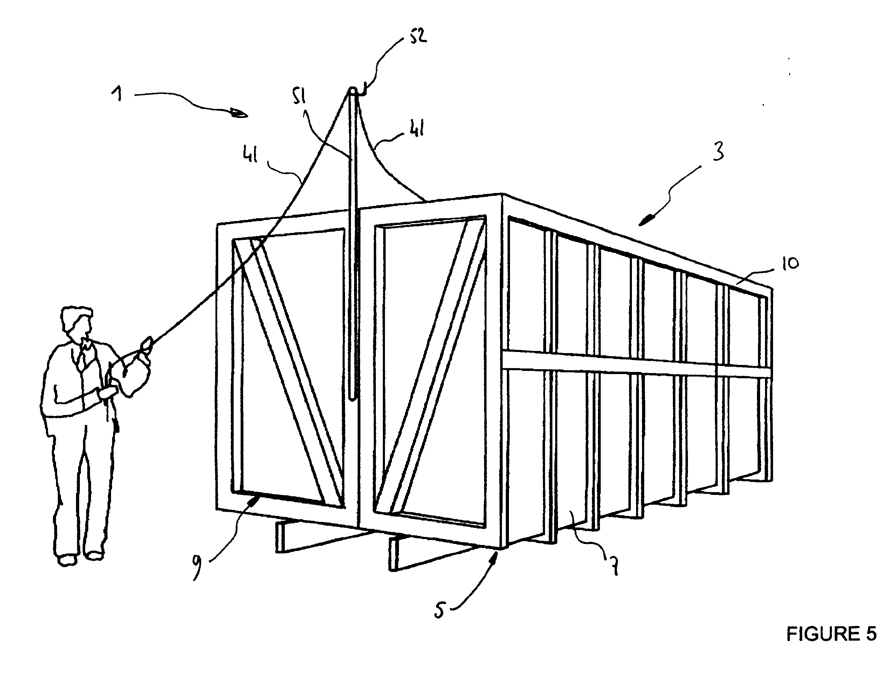

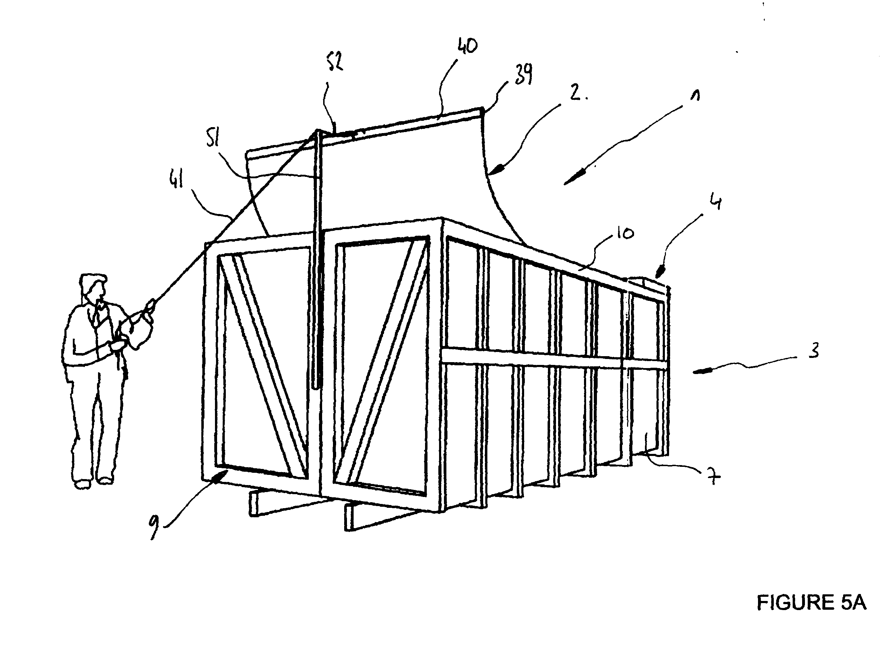

En figures 5 et 5a on a montré une variante des moyens de traction 38 utilisant la perche 45, à savoir que l'individu tire sur la sangle 41 pour amener au niveau de la porte 9 la bâche ou le filet de protection 2.

On remarque que l'un des vantaux de la porte 9 présente, à proximité de son bord libre opposé à celui portant les articulations, un bras télescopique 51 qui se soulève au-dessus de ladite porte.

Le bras télescopique 51 comporte à son extrémité supérieure une fourche 52 destinée à recevoir la sangle de traction 41. La position éloignée de la fourche 52 du bras 51 permet lorsque l'individu tire sur la sangle 41, de faire passer la bâche 2 au-dessus des produits en vrac retenus à l'intérieur du conteneur 3.

De plus, la position soulevée du bras 51 empêche l'individu d'ouvrir la porte 9 de manière malencontreuse. En effet, le bras 51 comporte un doigt horizontal qui empêche l'ouverture du système de verrouillage de la porte 9.

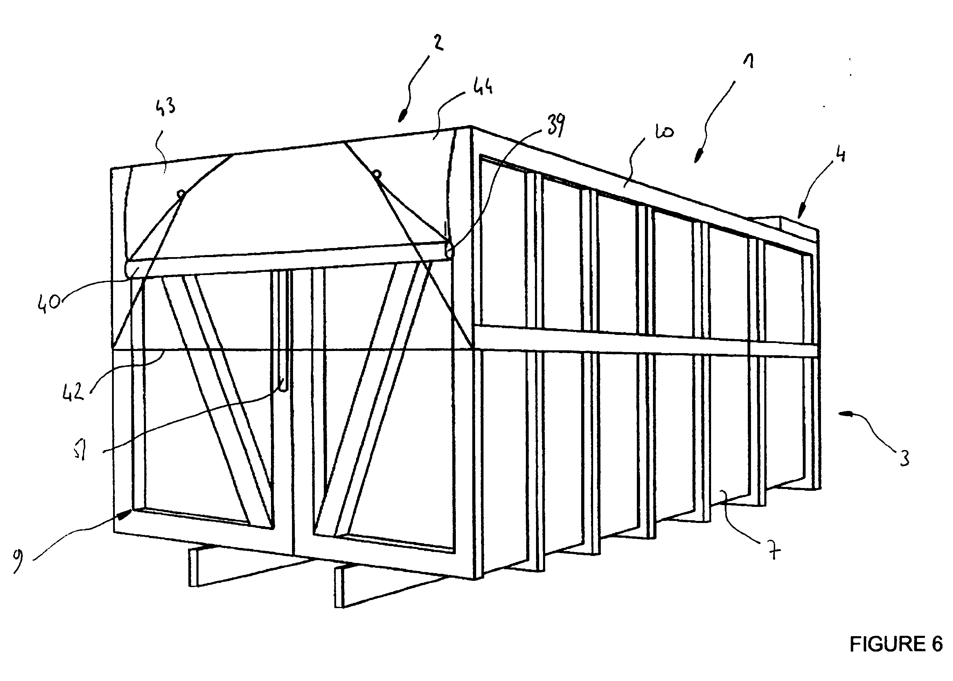

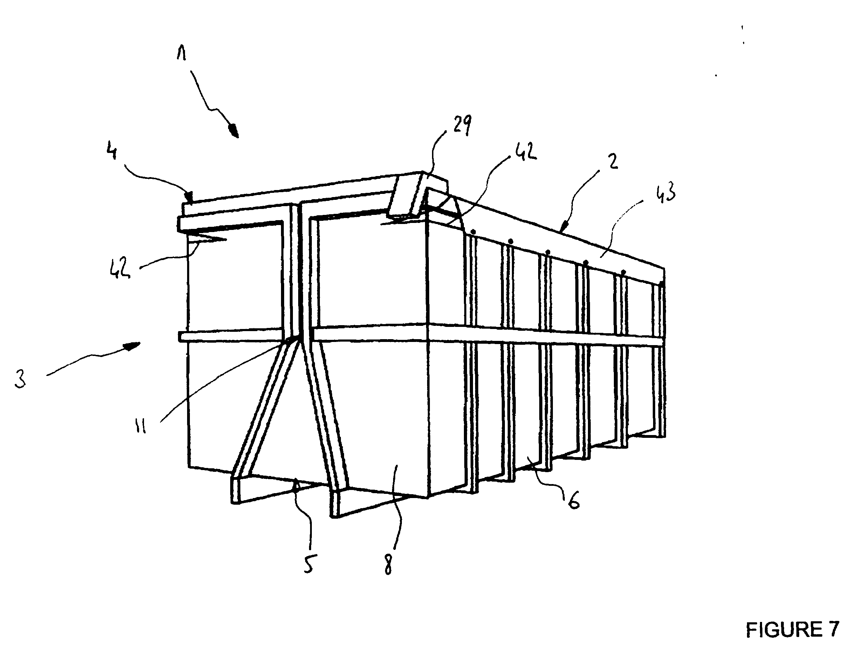

En figures 6 et 7 on a représenté la fixation de la bâche ou le filet de protection 2 sur le conteneur 3 après que celui-ci soit déroulé par l'intermédiaire, soit de la perche 45, soit de la sangle 41.

La bâche 2 est fixée sur les parois 6, 7, et la porte 9 du conteneur 3 par l'intermédiaire du lien élastique 42 qui coopère avec des moyens de retenue solidaire du conteneur 3.

Pour enrouler la bâche à l'intérieur du caisson 4, il est nécessaire de libérer le lien élastique 42 des moyens de retenue solidaires du conteneur 3, afin que les rebords 43, 44 de ladite bâche se replies automatiquement.

En effet, la position et le trajet du lien élastique 42 sur la longueur de la bâche 2 permet au rebord 43, 44 de se plier automatiquement en direction de l'intérieur de ladite bâche avant l'enroulement de cette dernière à l'intérieur du caisson 4.

Ensuite, l'individu actionne, par l'intermédiaire de la canne 32, les moyens d'entraînement 31 pour pouvoir enrouler la bâche ou le filet de protection 2 autour de l'arbre horizontal 25 du caisson 4.

## Revendications

1. Dispositif pour l'enroulement et le déroulement d'une bâche (2) de protection au-dessus d'un conteneur (3) transportable sur un véhicule tracteur ou sur une remorque tractée, **caractérisé en ce qu**'il comporte :
• un caisson (4) qui est fixé à l'intérieur du conteneur (3), et plus particulièrement dans la partie supérieure de la paroi (8) recevant des moyens d'accrochage (11) d'un bras à crochet solidaire du véhicule tracteur, ledit caisson étant positionné de manière qu'une partie de sa hauteur dépasse au-dessus du conteneur (3) ;
• une bâche (2) de couverture qui est déplacée entre une position rétractée ou enroulée à l'intérieur du caisson (4), à une position tendue ou déroulée pour couvrir le conteneur (3) ;
• des moyens de traction (38) pour le déroulement de la bâche au-dessus du conteneur ;
• et des moyens d'entraînement (31) pour l'enroulement de la bâche (2) autour d'un arbre horizontal (25) qui est guidé à l'intérieur du caisson (4).

2. Dispositif pour l'enroulement et le déroulement d'une bâche (2) de protection au-dessus d'un conteneur (3) suivant la revendication 1, **caractérisé en ce que** le caisson métallique (4) est obtenu à partir d'une tôle pliée afin de délimiter un fond (12), des parois parallèles et verticales de grande longueur (13, 14).

3. Dispositif pour l'enroulement et le déroulement d'une bâche (2) de protection au-dessus d'un conteneur (3) suivant la revendication 2, **caractérisé en ce que** les parois (13 et 14) sont réunies entre elles dans la partie supérieure du caisson (4) par une ceinture périphérique de renfort (15).

4. Dispositif pour l'enroulement et le déroulement d'une bâche (2) de protection au-dessus d'un conteneur (3) suivant la revendication 2, **caractérisé en ce que** la paroi verticale (14) reçoit dans sa partie supérieure un couvercle (16) qui est articulé autour de charnières (17) pour fermer le caisson (4).

5. Dispositif pour l'enroulement et le déroulement d'une bâche (2) de protection au-dessus d'un conteneur (3) suivant la revendication 4, **caractérisé en ce que** le couvercle (16) est obtenu par pliage d'une tôle de manière à présenter deux ailes extrêmes et opposées (18, 19) venant obstruer, en position fermée, les cotés ouverts de plus petites dimensions du caisson (4).

6. Dispositif pour l'enroulement et le déroulement d'une bâche (2) de protection au-dessus d'un conteneur (3) suivant la revendication 2, **caractérisé en ce que** le caisson (4) comporte sur l'un de ses cotés ouvert une joue (20) en forme d'équerre dont sa face horizontale (21) est solidaire de deux tôles verticales et opposées (22, 23) qui se termine au niveau de la ceinture de renfort (15) et d'un palier (24) pour le guidage en rotation de l'arbre horizontal (25).

7. Dispositif pour l'enroulement et le déroulement d'une bâche (2) de protection au-dessus d'un conteneur (3) suivant la revendication 2, **caractérisé en ce que** le caisson (4) comporte sur l'un de ses cotés ouvert une joue (26) en forme d'équerre dont sa face horizontale (27) est solidaire d'une tôle verticale (28) s'étendant jusqu'à la ceinture périphérique (15), d'une goulotte de protection (29) à profil coudé.

8. Dispositif pour l'enroulement et le déroulement d'une bâche (2) de protection au-dessus d'un conteneur (3) suivant la revendication 1, **caractérisé en ce que** les moyens de traction (38) sont constitués d'un tube (39) logé dans un fourreau (40) réalisé dans un pli de la bâche (2) et d'une perche (45) qui pénètre dans le tube (39) pour, d'une part soulever la bâche (2) au-dessus des produits en vrac retenus dans le conteneur (3), et d'autre part déplacer ou dérouler la bâche (2).

9. Dispositif pour l'enroulement et le déroulement d'une bâche (2) de protection au-dessus d'un conteneur (3) suivant la revendication 8, **caractérisé en ce que** la perche (45) comporte une tige verticale (46) se prolongeant à chaque extrémité par une tige horizontale (47, 48) dirigée dans des directions opposées.

10. Dispositif pour l'enroulement et le déroulement d'une bâche (2) de protection au-dessus d'un conteneur (3) suivant la revendication 9, **caractérisé en ce que** la tige (47) est reliée à celle (46) par l'intermédiaire d'un tube de renfort (49) comportant à proximité de la tige (46) un raccordement horizontal (50).

11. Dispositif pour l'enroulement et le déroulement d'une bâche (2) de protection au-dessus d'un conteneur (3) suivant la revendication 1, **caractérisé en ce que** les moyens de traction (38) sont constitués d'une sangle (41) et d'un bras télescopique (51) qui se soulève au-dessus du conteneur (3) au niveau de sa porte (9).

12. Dispositif pour l'enroulement et le déroulement d'une bâche (2) de protection au-dessus d'un conteneur (3) suivant la revendication 11, **caractérisé en ce que** le bras télescopique (51) comporte à son extrémité supérieure une fourche (52) destinée à recevoir la sangle de traction (41).

13. Dispositif pour l'enroulement et le déroulement d'une bâche (2) de protection au-dessus d'un conteneur (3) suivant la revendication 1, **caractérisé en ce que** les moyens d'entraînement (31) sont constitués d'un assemblage d'axes cylindriques (33, 34) guidés dans des paliers et reliés entre eux par des cardans ou renvois d'angles (35, 36).

14. Dispositif pour l'enroulement et le déroulement d'une bâche (2) de protection au-dessus d'un conteneur (3) suivant la revendication 13, **caractérisé en ce que** les axes (33, 34) sont disposés dans des plans d'inclinaisons différents par rapport au plan horizontal contenant l'arbre (25).

15. Dispositif pour l'enroulement et le déroulement d'une bâche (2) de protection au-dessus d'un conteneur (3) suivant la revendication 13, **caractérisé en ce que** l'axe cylindrique (34) est solidaire d'un anneau (37) prévus pour recevoir le crochet d'une canne (32) permettant l'entraînement en rotation de l'arbre (25) pour l'enroulement de la bâche (2).

16. Dispositif pour l'enroulement et le déroulement d'une bâche (2) de protection au-dessus d'un conteneur (3) suivant la revendication 7, **caractérisé en ce que** la face horizontale (27) est solidaire d'un palier (24) pour le guidage en rotation de l'arbre horizontal (25).

17. Dispositif pour l'enroulement et le déroulement d'une bâche (2) de protection au-dessus d'un conteneur (3) suivant la revendication 7, **caractérisé en ce que** la face horizontale (27) et la face inclinée (30) sont prévues pour recevoir les moyens d'entraînement (31) pour l'enroulement de la bâche (2) autour de l'arbre horizontal (25).
